# EUROPEAN PATENT SPECIFICATION

(11) **EP 3 584 064 B1**
(45) Date of publication and mention of the grant of the patent: **10.08.2022**
(21) Application number: 18775979.0
(22) Date of filing: 27.03.2018
(51) Int. Cl.: B29C 64/386, B22F 3/105, B29C 64/153, B33Y 10/00, B29C 64/393, B33Y 30/00, B33Y 50/02, G06F 30/00

(54) **THREE-DIMENSIONAL LAMINATION SHAPING CONDITION DETERMINATION METHOD, THREE-DIMENSIONAL LAMINATION SHAPING EXECUTION METHOD, THREE-DIMENSIONAL LAMINATION SHAPING CONDITION DETERMINATION DEVICE, AND THREE-DIMENSIONAL LAMINATION SHAPING EXECUTION DEVICE**
VERFAHREN ZUR FESTLEGUNG VON BEDINGUNGEN ZUR DREIDIMENSIONALEN LAMINIERUNGSFORMUNG, VERFAHREN ZUR AUSFÜHRUNG EINER DREIDIMENSIONALEN LAMINIERUNGSFORMUNG, VORRICHTUNG ZUR FESTLEGUNG VON BEDINGUNGEN ZUR DREIDIMENSIONALEN LAMINIERUNGSFORMUNG UND VORRICHTUNG ZUR AUSFÜHRUNG EINER DREIDIMENSIONALEN LAMINIERUNGSFORMUNG
PROCÉDÉ DE DÉTERMINATION DE CONDITION DE MISE EN FORME PAR STRATIFICATION TRIDIMENSIONNELLE, PROCÉDÉ D'EXÉCUTION DE MISE EN FORME PAR STRATIFICATION TRIDIMENSIONNELLE, DISPOSITIF DE DÉTERMINATION DE CONDITION DE MISE EN FORME PAR STRATIFICATION TRIDIMENSIONNELLE, ET DISPOSITIF D'EXÉCUTION DE MISE EN FORME PAR STRATIFICATION TRIDIMENSIONNELLE

(30) Priority: 30.03.2017 JP 2017069205
(43) Date of publication of application: 25.12.2019
(73) Proprietor: Mitsubishi Power, Ltd., Yokohama (JP)
(72) Inventor: FUKUDA, Takahiro, Tokyo 108-8215 (JP); OHARA, Toshinobu, Tokyo 108-8215 (JP); KOMAKI, Takanao, Yokohama-shi Kanagawa 220-8401 (JP); NAGAME, Atsushi, Yokohama-shi Kanagawa 220-8401 (JP)
(74) Representative: Henkel & Partner mbB
(86) International application number: PCT/JP2018/012425
(87) International publication number: WO 2018/181306

(56) References cited:
- EP-A1- 3 026 516
- JP-A- 2002 038 201
- JP-A- 2015 196 264
- US-A1- 2013 124 151
- US-A1- 2015 362 898
- US-A1- 2016 136 896

## Description

### TECHNICAL FIELD

The present disclosure relates to a three-dimensional additive manufacturing method and a three-dimensional additive manufacturing device.

### BACKGROUND ART

Conventionally, three-dimensional additive manufacturing (AM) technologies that build a three-dimensional object by stacking layer-upon-layer of additive manufactured material according to design data (CAD data) are known (see Patent Documents 1 to 4, for instance). For instance, in a metal additive manufacturing method known as one of the three-dimensional additive manufacturing technologies, in accordance with predetermined manufacturing conditions (e.g., beam irradiation conditions, thickness of powder layer), metal powder is thinly spread onto a base plate by a recoater to form a thin powder layer, and a portion corresponding to a build part is irradiated with beam (e.g., laser beam or electron beam) to selectively melt and solidify the powder layer. By repeating the steps of forming a powder layer on top of the solidified powder layer and solidifying the layer by beam irradiation, a three-dimensional object is completed.

Such a three-dimensional additive manufacturing technology enables manufacturing of complicated shape parts that cannot be achieved by conventional methods such as forging and casting and is applied to a wide range of fields, such as aerospace, automobiles, industrial devices, and implants. For instance, Patent Document 2 discloses that a turbine blade is manufactured by the three-dimensional additive manufacturing technology (metal additive manufacturing method), whereby it is possible to manufacture a turbine blade with excellent finished dimensions in a short time.

The manufacturing conditions, including various conditions such as the number of irradiation, scanning speed, scanning pitch, scanning pattern, layer height, beam output, are related to melting and solidification of metal powder. Thus, the manufacturing conditions are generally optimized for each material (see Patent Documents 3 and 4). For instance, Patent Document 3 discloses that the beam output is changed for each metal powder used as the additive manufactured material. Further, Patent Document 4 discloses a stereolithography apparatus that cures a photo-curable resin by sweeping light and stacks the cured portion layer by layer to form a three-dimensional object. This apparatus evaluates whether the shape error of the cured portion of the photo-curable resin detected in real time is within an acceptable value for each resin layer, for instance; if the shape error is within the acceptable value, manufacturing is performed; and if the shape error is beyond the acceptable value, the manufacturing conditions is changed, and manufacturing is then performed.

### Citation List

### Patent Literature

Patent Document 1: JP2015-134411A
Patent Document 2: JP2003-129862A
Patent Document 3: JP2015-193866A
Patent Document 4: JPH9-76353A
Patent Document 5: EP 3 026 516 A1

Patent Document 5 discloses an exemplary method for determining a set of additive manufacturing parameters including a) determining a nominal parameter of at least one surface of a component, b) determining at least a second order variation in the nominal parameter, c) predicting an actual resultant dimension based at least in part on the nominal parameter and the second order variation, and d) adjusting at least one additive manufacturing process parameter in response to the predicted actual resultant dimension.

### SUMMARY

### Problems to be Solved

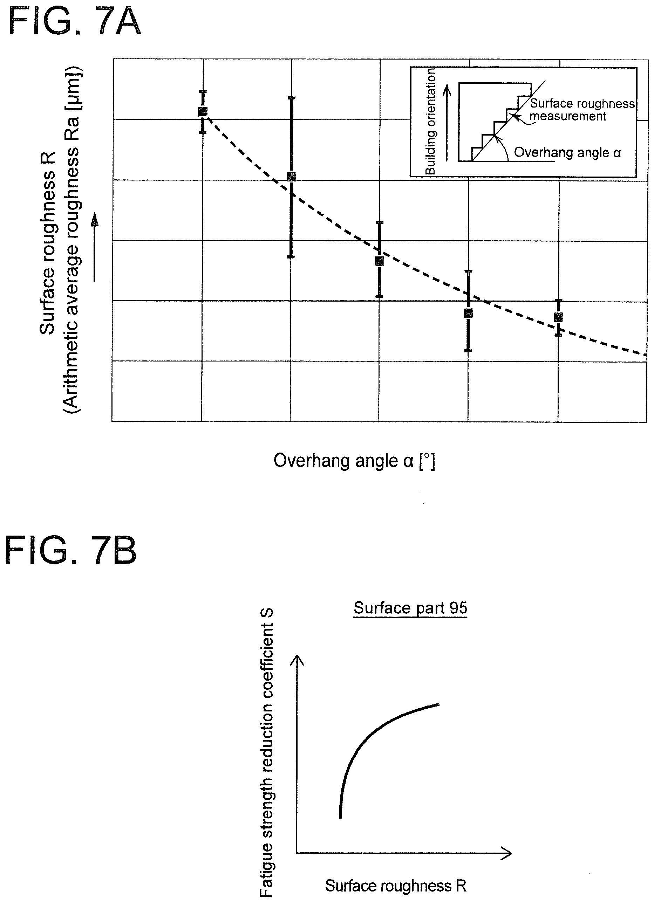

In the three-dimensional additive manufacturing technologies such as the metal additive manufacturing method, internal defects such as micro-void may be formed during manufacturing of a three-dimensional object. Further, the present inventors have found that surface roughness tends to increase in an inclined side part of the three-dimensional object
(see FIG. 7A described later). Such internal defects and surface roughness may cause a decrease in high-cycle fatigue life and affect the fatigue life of the three-dimensional object. This problem can be reduced by optimizing the manufacturing conditions, for instance, by increasing the number of beam irradiation, decreasing the scanning speed, or decreasing the scanning pitch. However, manufacturing under such conditions requires a long manufacturing time for completing the three-dimensional object and increases the productivity cost and the manufacturing cost.

In view of the above, an object of at least one embodiment of the present invention is to provide a three-dimensional additive manufacturing method whereby it is possible to build a three-dimensional object satisfying the fatigue life without increasing the manufacturing time. Solution to the Problems

Accordingly, there is provided a computer-implemented method as set out in independent claim 1, a data processing apparatus as set out in claim 6, a three-dimensional additive manufacturing execution method as set out in claim 7 and a three-dimensional additive manufacturing execution device as set out in claim 8. Advantageous developments are defined in the dependent claims.

### Advantageous Effects

At least one embodiment of the present invention provides a three-dimensional additive manufacturing method whereby it is possible to build a three-dimensional object satisfying the fatigue life without increasing the manufacturing time.

### BRIEF DESCRIPTION OF DRAWINGS

FIG. 1 is a schematic diagram of a three-dimensional additive manufacturing device according to an embodiment of the present invention.
FIG. 2 is a diagram of a three-dimensional additive manufacturing method according to an embodiment of the present disclosure.
FIG. 3 is a diagram of a specific part manufacturing condition determination step according to an embodiment of the present invention.
FIG. 4 is a diagram showing details of a specific part manufacturing condition determination step according to an embodiment of the present invention.
FIG. 5 is a diagram for describing a relationship between internal defect dimension and fatigue strength.
FIG. 6A is a diagram for describing a relationship between internal defect dimension and fatigue strength reduction coefficient in a volume part according to an embodiment of the present invention.
FIG. 6B is a diagram for describing a relationship between internal defect dimension and fatigue strength reduction coefficient in a surface layer part according to an embodiment of the present invention.
FIG. 7A is a diagram for describing a relationship between overhang angle and surface roughness according to an embodiment of the present invention.
FIG. 7B is a diagram for describing a relationship between surface roughness and fatigue strength reduction coefficient according to an embodiment of the present invention.
FIG. 8 is a diagram for describing cases where predicted fatigue life is more than or less than designed fatigue life according to an embodiment of the present invention.
FIG. 9 is a flowchart of determining a manufacturing condition of a surface layer part according to an embodiment of the present invention.
FIG. 10 is a flowchart of determining a manufacturing condition of an inclined side part according to an embodiment of the present invention.
FIG. 11 is a flowchart of determining a manufacturing condition of a volume part according to an embodiment of the present invention.
FIG. 12 is a functional block diagram of a manufacturing condition determination device according to an embodiment of the present invention.

### DETAILED DESCRIPTION

Embodiments of the present invention will now be described in detail with reference to the accompanying drawings.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

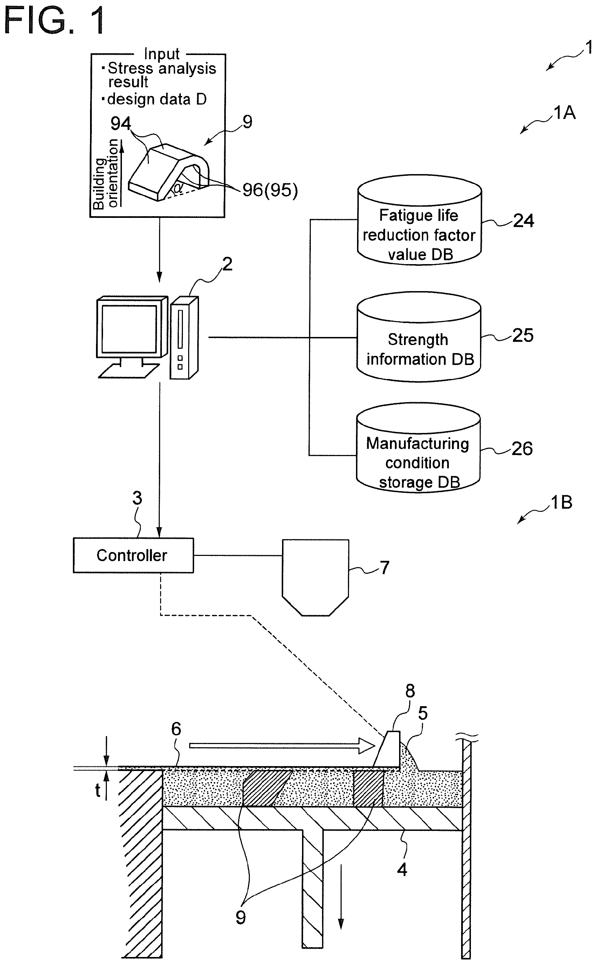

FIG. 1 is a schematic diagram of a three-dimensional additive manufacturing device 1 according to an embodiment of the present invention. The three-dimensional additive manufacturing device 1 is a device that builds a three-dimensional object 9 by layering an additive manufactured material based on design data D (CAD data) of the three-dimensional object 9. The three-dimensional additive manufacturing device 1 according to the embodiment shown in FIG. 1 is a device that manufactures the three-dimensional object 9 by a metal additive manufacturing method and includes a manufacturing execution device 1B for executing manufacturing and a manufacturing support device 1A for supporting the execution of manufacturing by the manufacturing execution device 1B. The manufacturing execution device 1B includes a base plate 4, a recoater 8 for forming a powder layer 6 (powder bed) composed of metal powder as an additive manufactured material 5 onto the base plate 4, a beam irradiation unit 7 for irradiating the powder layer 6 with beam (e.g., laser) to selectively solidify the powder layer 6 in accordance with the shape of the three-dimensional object 9, and a controller 3 controlling the recoater 8 and the beam irradiation unit 7. The manufacturing support device 1A includes a manufacturing condition determination device 2 configured to input a manufacturing condition C of the three-dimensional object 9 into the controller 3, and various databases (fatigue life reduction factor value DB 24, strength information DB 25, manufacturing condition storage DB 26) connected to the manufacturing condition determination device 2.

In the three-dimensional additive manufacturing device 1, a two-dimensional slice data and the manufacturing condition C used for building the three-dimensional object 9 is input from the manufacturing condition determination device 2 to the controller 3. The two-dimensional slice data is generated by slicing a three-dimensional data included in the design data D of the three-dimensional object 9 into multiple slices along one direction. Under control by the controller 3 based on the two-dimensional slice data and the manufacturing condition C, metal powder (additive manufactured material 5) is spread onto the base plate 4 by the recoater 8 to form a powder layer 6, the metal powder corresponding to the build part is melted and solidified by beam, the base plate 4 is lowered, further metal powder is spread onto the base plate 4, and the metal powder corresponding to the build part is melted and solidified by laser again. By repeating this process, the additive manufactured material 5 is stacked layer by layer along a building orientation opposite to the gravity direction, and the three-dimensional object 9 is built.

In the embodiment shown in FIG. 1, the controller 3 and the manufacturing condition determination device 2 are separate. However, in other embodiments, the controller 3 and the manufacturing condition determination device 2 may be implemented in the same device, for instance, the controller 3 may be incorporated in the manufacturing condition determination device 2. Further, the two-dimensional slice data may be generated by the controller 3 upon directly receiving the design data D, or may be generated by the manufacturing condition determination device 2 having a function therefor. Alternatively, the two-dimensional slice data may be generated by another device (computer) not depicted and may be input into the controller 3 directly or via the manufacturing condition determination device 2.

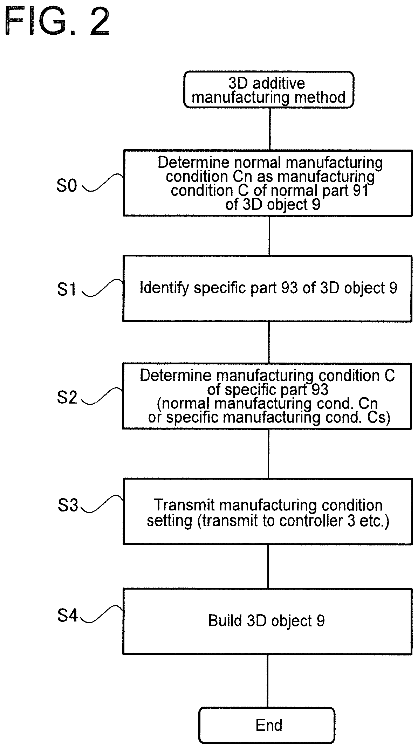

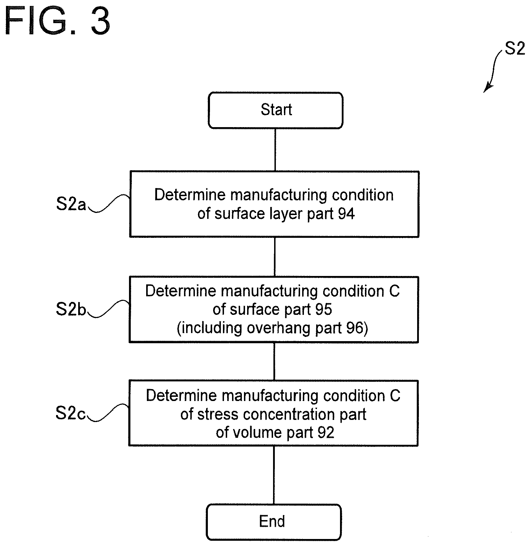

In the following, a three-dimensional additive manufacturing method performed by the three-dimensional additive manufacturing device 1 including the manufacturing execution device 1B will be described with reference to FIGs. 2 and 3. FIG. 2 is a diagram of a three-dimensional additive manufacturing method according to an embodiment of the present disclosure. FIG. 3 is a diagram of a specific part manufacturing condition determination step (S2) according to an embodiment of the present invention.

This three-dimensional additive manufacturing method is to build a three-dimensional object 9 by layering an additive manufactured material 5 based on design data D of the three-dimensional object 9. As shown in FIG. 2, this method includes a specific part identification step (S1), a specific part manufacturing condition determination step (S2), and a manufacturing condition setting transmission step (S3).

In the specific part identification step (S1), a specific part 93 included as a part of the three-dimensional object 9 is identified based on the design data D. The specific part 93 is a specific portion of the three-dimensional object 9 where difference in the manufacturing condition C has a relatively large effect on fatigue life. Examples of such a portion (specific part 93) include a surface layer part 94 which is a portion from the surface (outermost surface) (hereinafter, surface part 95) of the solid of the three-dimensional object 9 to a predetermined depth inside the solid, the surface part 95 itself, an overhang part 96 of the surface part 95 described later, and a portion having a shape where stress tends to concentrate.

More specifically, internal defects such as micro-void may occur during manufacturing of the three-dimensional object 9, and the shape and the size of the defects are determined probablistically in accordance with the manufacturing condition C. If internal defects occur in the surface layer part 94, fatigue life is significantly reduced compared with the case internal defects occur in a volume part 92 which is a portion deeper than the surface layer part 94. Thus, in terms of fatigue life, internal defects caused under a certain manufacturing condition C can be acceptable if they occur in the volume part 92 but can be unacceptable if they occur in the surface layer part 94, according to the shape and the size of defects. Hereinafter, quantified shape and size of dimensions of internal defects are referred to as internal defect dimension "a". Specifically, internal defect dimension "a" may be maximum length or average length of internal defects.

In addition, surface roughness R of the surface part 95 (hereinafter, simply referred to as surface roughness R, as appropriate) varies with the manufacturing condition. As surface roughness R increases, fatigue life decreases. Thus, in terms of fatigue life, manufacturing under a certain manufacturing condition C can be acceptable in parts other than the surface part 95 but can be unacceptable in the surface part 95 due to the increase in surface roughness R. In particular, surface roughness R is larger in the overhang part 96 of the three-dimensional object 9 than in the other surface part 95 even under the same manufacturing condition C (see FIG. 7A described later). The overhang part 96 here described is a portion of the surface part 95 inclined at a predetermined inclination angle (overhang angle a) with respect to a direction (horizontal direction in case of FIG. 1) perpendicular to the building orientation of the additive manufactured material 5 of the three-dimensional object 9, where the outward normal line of the surface part 95 has a component opposite to the building orientation (0°≤α<90°). Such a portion is not supported by the preceding solidified portion when the powder layer 6 is spread and solidified thereon, and thus tends to increase surface roughness R (see FIG. 7A).

The volume part 92 may include a portion having a shape where stress of the three-dimensional object 9 tends to concentrate (stress concentration part). In this case, in terms of fatigue life, manufacturing under a certain manufacturing condition C can be acceptable in parts other than the stress concentration part but can be unacceptable in the stress concentration part due to stress concentration. The stress concentration part may be detected by numerical analysis (FEM) or the like and may be included in the specific part 93.

In the specific part manufacturing condition determination step (S2), it is determined whether to apply a specific manufacturing condition Cs different from a normal manufacturing condition Cn for building a normal part 91 other than the specific part 93 of the three-dimensional object 9 to building the specific part 93, and the manufacturing condition C of the specific part 93 is determined. More specifically, if at least one specific part 93 is identified in the three-dimensional object 9 to be built in the specific part identification step (S1), it is determined whether to apply the specific manufacturing condition Cs for each identified specific part 93. The manufacturing condition C of the specific part 93 that is determined to apply the specific manufacturing condition Cs is fixed to the specific manufacturing condition Cs, and the manufacturing condition C of the specific part 93 that is determined not to apply the specific manufacturing condition Cs is fixed to the normal manufacturing condition Cn. Thus, the specific manufacturing condition Cs is partially applied to the three-dimensional object 9.

In the embodiments shown in FIGs. 2 and 3, the specific part 93 includes four types: the surface layer part 94, the surface part 95, the overhang part 96 of the surface part 95, and the stress concentration part. Further, they are separated into three groups: the surface layer part 94, the surface part 95 including the overhang part 96, and the stress concentration art, and the manufacturing condition C to be applied is determined for each group (see FIG. 3). The specific manufacturing condition Cs and the normal manufacturing condition Cn are previously stored in a manufacturing condition storage DB 26 as shown in FIG. 1. The specific manufacturing condition Cs may be prepared for each type of the specific part 93, and the normal manufacturing condition Cn may be prepared according to the additive manufactured material 5.

In the manufacturing condition setting transmission step (S3), a manufacturing condition setting Ic is transmitted, with which the normal part 91 other than the specific part 93 is built under the normal manufacturing condition Cn, and the specific part 93 is built under the manufacturing condition C determined through determination in the specific part manufacturing condition determination step (S2). For instance, in a case where the manufacturing condition is determined by the manufacturing condition determination device 2, the manufacturing condition setting is transmitted from the manufacturing condition determination device 2 to the manufacturing execution device 1B (controller 3 in FIG. 1). In this case, for instance, in a case where the manufacturing condition setting Ic is transmitted by operation by the operator of the manufacturing condition determination device 2 such as pressing an execution button which instructs the device to start building, the transmission of the manufacturing condition setting Ic may be the operation by the operator. In a case where the manufacturing condition determination device 2 is not used, the transmission includes the operation of inputting the manufacturing condition C to the manufacturing execution device 1B such as the controller 3 shown in FIG. 1. Thereby, the manufacturing execution device 1B can start to build the three-dimensional object 9.

The normal manufacturing condition Cn is a manufacturing condition C determined so as to be suitable for building parts other than the specific part 93, such as the volume part 92, or determined in accordance with the additive manufactured material 5, in terms of fatigue life and fatigue strength, for instance. The specific manufacturing condition Cs is a condition that can improve the shape and size of internal defects in the three-dimensional object 9 or surface roughness R compared with the normal manufacturing condition Cn. Thus, build under the specific manufacturing condition Cs can decrease internal defect dimension "a" or reduce surface roughness R of the build part. In particular, the overhang part 96 and the stress concentration part are characteristic shaped portions of the three-dimensional object 9, and even if the normal manufacturing condition Cn is optimized for the additive manufactured material 5, fatigue life may decrease and may not satisfy a designed fatigue life Nd. Thus, these parts often need to be built under the specific manufacturing condition Cs.

More specifically, each of the normal manufacturing condition Cn and the specific manufacturing condition Cs includes at least one of a solidification condition of solidifying the additive manufactured material 5 or a layer thickness condition regarding layer thickness t (layer height) of the additive manufactured material 5. In a case where thin layers (e.g., powder layer 6) of the additive manufactured material 5 are irradiated with beam and solidified layer by layer by the metal additive manufacturing method (see FIG. 1) or the stereolithography, the solidification condition includes, for instance, the number of beam irradiation, scanning speed, scanning pitch, beam output, and offset (described later). Further, as described later, the specific manufacturing condition Cs includes a greater number of beam irradiation than the normal manufacturing condition Cn, for instance, whereby it is possible to improve internal defect dimension "a" and surface roughness R.

That is, the normal part 91 of the three-dimensional object 9 uses the normal manufacturing condition Cn, whereas the specific part 93 uses the manufacturing condition C (specific manufacturing condition Cs or normal manufacturing condition Cn) that is determined to be applied based on a result of determination whether it needs to be built under the specific manufacturing condition Cs. A portion built under the specific manufacturing condition Cs improves internal defect dimension "a" or surface roughness R but increases the manufacturing time, compared with building under the normal manufacturing condition Cn. Therefore, by applying the specific manufacturing condition Cs not to the whole of the three-dimensional object 9 but only to the specific part 93, it is possible to control an increase in manufacturing time or the like while improving the quality.

Next, the three-dimensional additive manufacturing method including the above steps will be described with reference to the flowchart shown in FIG. 2. In the following description, the procedure is performed by the manufacturing condition determination device 2.

In step S0 in FIG. 2, a normal part manufacturing condition determination step is performed, and the normal manufacturing condition Cn is determined as the manufacturing condition C of the normal part 91 of the three-dimensional object 9. For instance, step S0 may be performed by determining the normal manufacturing condition Cn as the manufacturing condition C of the whole (both normal part 91 and specific part 93) of the three-dimensional object 9 as default. Then, in step S1, the specific part identification step (S1) is performed, and the specific part 93 of the three-dimensional object 9 is identified. In step S2, the specific part manufacturing condition determination step (S2) is performed. More specifically, in step S2, the manufacturing condition C of the surface layer part 94 is determined in step S2a, and the manufacturing condition C of the surface part 95 (including overhang part 96) is determined in step S2b. Further, in step S2c, the manufacturing condition C of the stress concentration part in the volume part 92 is determined. In step S3, the manufacturing condition setting step (S3) is performed, and the determined manufacturing condition C is set (input) to the controller 3.

Then, in step S4, a manufacturing step is performed. That is, in accordance with the set (input) manufacturing condition C and the two-dimensional slice data, the controller 3 controls the recoater 8 and the beam irradiation unit 7 to build the three-dimensional object 9.

With the above configuration, while the normal part 91 of the three-dimensional object 9 is built under the normal manufacturing condition Cn, the specific part 93 is built under the determined manufacturing condition C. Thus, it is possible to build each of the normal part 91 and the specific part 93 of the three-dimensional object 9 under the corresponding manufacturing conditions C. Further, the specific manufacturing condition Cs, including, for instance, a greater number of irradiation than the normal manufacturing condition Cn to improve internal detects and surface roughness, can improve the fatigue life of the specific part 93 (three-dimensional object 9). By applying this specific manufacturing condition Cs not to the whole of the three-dimensional object 9 but only to the specific part 93, it is possible to control an increase in manufacturing time.

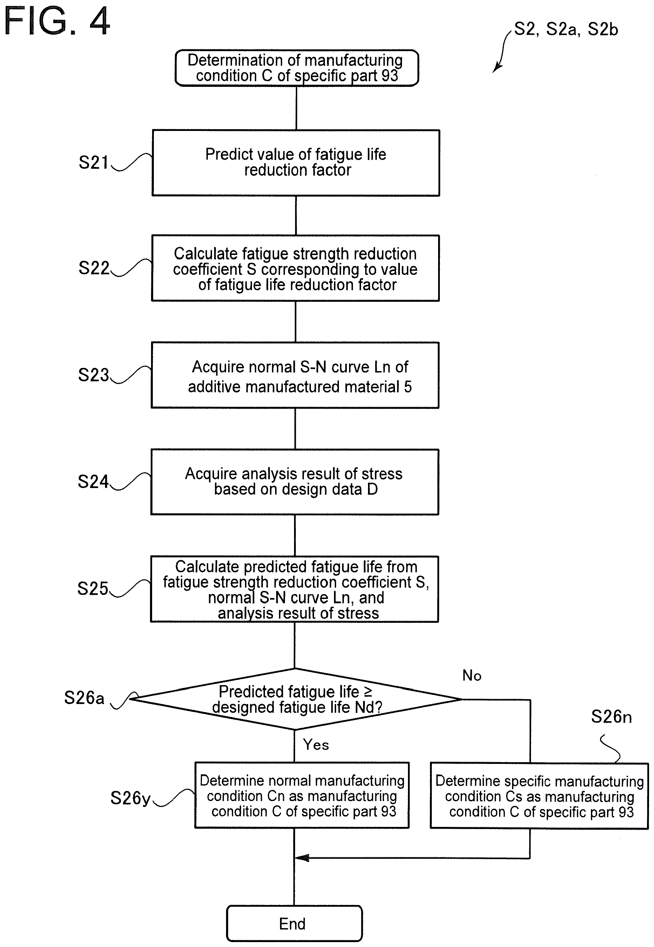

Next, some embodiments related to a method of determining the manufacturing condition C applied to the specific part 93 of the three-dimensional object 9 will be described with reference to FIGs. 4 to 8.

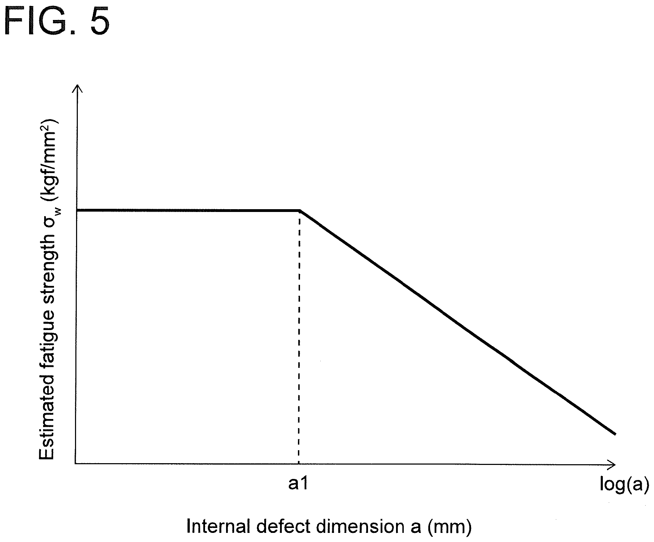

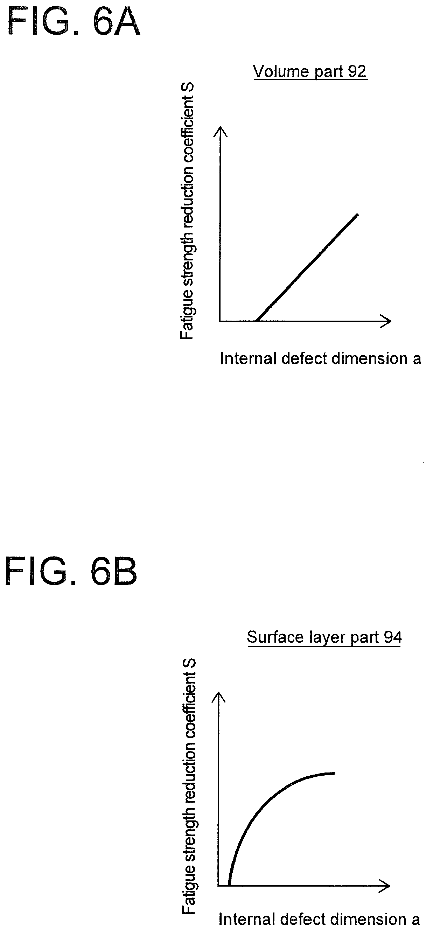

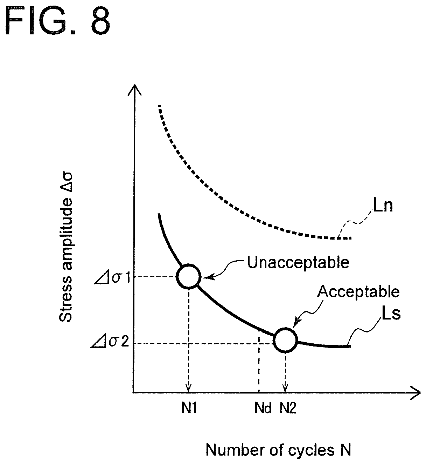

FIG. 4 is a diagram showing details of the specific part manufacturing condition determination step (S2) according to an embodiment of the present invention. FIG. 5 is a diagram for describing a relationship between internal defect dimension "a" and fatigue strength σw. FIG. 6A is a diagram for describing a relationship between internal defect dimension "a" and fatigue strength reduction coefficient S in the volume part 92 according to an embodiment of the present invention. FIG. 6B is a diagram for describing a relationship with fatigue strength reduction coefficient S in the surface layer part 94 according to an embodiment of the present invention. FIG. 7A is a diagram for describing a relationship between overhang angle α and surface roughness R according to an embodiment of the present invention. FIG. 7B is a diagram for describing a relationship between surface roughness R and fatigue strength reduction coefficient S according to an embodiment of the present invention. FIG. 8 is a diagram for describing cases where predicted fatigue life is more than or less than designed fatigue life Nd according to an embodiment of the present invention.

In embodiments according to the claimed invention, as shown in FIG. 4, the specific part manufacturing condition determination step (S2 of FIG. 2, S2a of FIG. 3, step S2b of FIG. 3) includes a factor value prediction step (S21) and an applied condition determination step (S22 to S26).

In the factor value prediction step (S21), the value of a fatigue life reduction factor which is at least one of internal defect dimension "a" or surface roughness when the specific part 93 is built under the normal manufacturing condition Cn is predicted. More specifically, internal defect dimension "a" and surface roughness R when the three-dimensional object 9 is built under the normal manufacturing condition Cn is measured in advance for each type of the additive manufactured material 5 through experiment and stored in the database (fatigue life reduction factor value DB 24). Thus, by referring to the fatigue life reduction factor value DB 24, it is possible to predict internal defect dimension "a" and surface roughness R in accordance with the manufacturing condition C for each additive manufactured material 5. For instance, internal defect dimension "a" may be frequency distribution (possibility distribution) when the three-dimensional object 9 is built under the normal manufacturing condition Cn, whereby it is possible to predict internal defect dimension "a" caused at a desired probability (e.g., 2σ, 3σ). Further, surface roughness R may be divided by a portion depending on the shape such as the overhang part 96 and the remainder portion of the surface part 95, and surface roughness R may be predicted for each portion.

In the applied condition determination step (S22 to S26), it is determined whether to apply the specific manufacturing condition Cs to building the specific part 93 based on a prediction result of the value of the fatigue life reduction factor in the factor value prediction step (S21). In some embodiments, this determination may be based on comparison between the value of the fatigue life reduction factor and a predetermined threshold set for each fatigue life reduction factor, and it may be determined to apply the specific manufacturing condition Cs to building the specific part 93 if the value of the fatigue life reduction factor is equal to or more than the predetermined threshold, and conversely, apply the normal manufacturing condition Cn to building the specific part 93 if the value of the fatigue life reduction factor is less than the predetermined threshold. As shown in FIG. 5, an estimated fatigue strength σw (fatigue limit) is constant until internal defect dimension "a" reaches a predetermined value a1 but gradually decreases as internal defect dimension "a" increases from a1. In view of this, a value at which the estimated fatigue strength σw decreases beyond the allowance may be set as the threshold, for instance.

In some embodiments, as described later, the determination may be performed through calculation of fatigue strength reduction coefficient S, as described later.

With the above configuration, since the determination whether to apply the specific manufacturing condition Cs to building the specific part 93 is based on a prediction result of the value of the fatigue life reduction factor, it is possible to build the three-dimensional object 9 satisfying the demand of fatigue life. The manufacturing condition C determined in the applied condition determination step (S22 to S26) is determined as the manufacturing condition C of the specific part 93, and thus, the manufacturing condition C of the specific part 93 is fixed to either the normal manufacturing condition Cn or the specific manufacturing condition Cs. At the same time, the manufacturing condition C of the normal part 91 is fixed to the normal manufacturing condition Cn.

Further, in some embodiments, the applied condition determination step (S22 to S26) may be determined through calculation of fatigue strength reduction coefficient S as shown in FIG. 4. More specifically, the applied condition determination step (S22 to S26) includes a fatigue strength reduction coefficient calculation step (S22), a normal S-N curve acquisition step (S23), a stress analysis result acquisition step (S24), and an application determination step (S25 and S26).

In the fatigue strength reduction coefficient calculation step (S22), fatigue strength reduction coefficient S corresponding to the value of the fatigue life reduction factor predicted in the factor value prediction step (S21) is calculated. Fatigue strength reduction coefficient S is a coefficient used for predicting to what extent a S-N curve (hereinafter, referred to as normal S-N curve) of a smooth specimen made of the additive manufactured material 5 falls depending on the value of the fatigue life reduction factor. For instance, by multiplying the normal S-N curve Ln by the fatigue strength reduction coefficient, prediction of S-N curve (hereinafter, predicted S-N curve) corresponding to the fatigue strength reduction coefficient is obtained (see FIG. 8). This fatigue strength reduction coefficient S is obtained in advance by experiment or numerical analysis or the like. For instance, the strength reduction coefficient S may be stored in the database (strength information DB 25) together with the normal S-N curve Ln (see FIG. 1). By referring to the strength information DB, fatigue strength reduction coefficient S corresponding to the value of the fatigue life reduction factor and the additive manufactured material 5 is obtained.

When a relationship between internal defect dimension "a" and fatigue strength reduction coefficient S is described, as shown in FIGs. 6A and 6B, fatigue strength reduction coefficient S increases with the increase in internal defect dimension "a". However, the surface layer part 94 and the volume part 92 are different in how fatigue strength reduction coefficient S increases against internal defect dimension "a". More specifically, in the volume part 92, fatigue strength reduction coefficient S increases in proportion to the increase in internal defect dimension "a" (see FIG. 6A). By contrast, in the surface layer part 94, fatigue strength reduction coefficient S increases logarithmically with the increase in internal defect dimension "a" (see FIG. 6B). That is, the influence of internal defect dimension "a" on fatigue strength reduction coefficient S is more remarkable in the surface layer part 94 than in the volume part 92. This is a reason why the surface layer part 94 of the three-dimensional object 9 is defined as the specific part 93, as described above.

On the other hand, when a relationship between surface roughness R and fatigue strength reduction coefficient S is described, as shown in FIG. 7B, fatigue strength reduction coefficient S increases logarithmically with the increase in surface roughness R. In particular, surface roughness R is affected by overhang angle α, and as shown in FIG. 7A, surface roughness R (arithmetic average roughness Ra) increases with the decrease in overhang angle a. This is a reason why the overhang part 96 of the three-dimensional object 9 is defined as the specific part 93, as described above.

In the normal S-N curve acquisition step (S23), a normal S-N curve Ln indicating a relationship between stress amplitude Δσ and the number of cycles to failure N of a smooth specimen made of the additive manufactured material 5 described above is acquired. For instance, the normal S-N curve Ln obtained by fatigue test or numerical analysis (FEM) or from literature values may be previously stored in the strength information DB 25, and the normal S-N curve may be acquired from the strength information DB 25 (see FIG. 1).

In the stress analysis result acquisition step (S24), an analysis result of stress of at least a part of the three-dimensional object 9 such as the specific part 93 is acquired based on the design data D. For instance, as shown in FIG. 1, an analysis result of stress (stress amplitude Δσ) generated in the specific part 93 as measured by numerical analysis such as FEM may be input into the manufacturing condition determination device 2. In some embodiments, analysis results of stress in accordance with the shape or the partial shape of the three-dimensional object may be compiled into a database in advance, and the result may be acquired from this database. In some embodiments, the result may be acquired by actually performing stress analysis in this step.

In the application determination step (S25 and S26), using fatigue strength reduction coefficient S and the normal S-N curve Ln, a predicted fatigue life which is the number of cycles to failure corresponding to the analysis result of stress acquired in the stress analysis result acquisition step (S24) is calculated for the specific part 93 (S25), and it is determined whether to apply the specific manufacturing condition Cs to building the specific part 93 based on comparison between the calculated predicted fatigue life and a designed fatigue life Nd (S26). The predicted fatigue life of the specific part 93 can be calculated by calculating (multiplying) the normal S-N curve Ln and fatigue strength reduction coefficient S to obtain a predicted S-N curve Ls regarding the specific part 93, and then obtaining the number of cycles N corresponding to the stress amplitude Δσ obtained as a result of the stress analysis, using the predicted S-N curve Ls.

To explain about determination of the manufacturing condition C applied to the specific part 93 with reference to FIG. 8, when the analysis result of stress occurring in the specific part 93 is stress amplitude Δσ1, for instance, the predicted fatigue life is N1, as derived from the predicted S-N curve Ls. In this case, the predicted fatigue life (N1) is less than the designed fatigue life Nd (N1<Nd). Accordingly, since the designed fatigue life Nd is not satisfied, building the specific part 93 under the normal manufacturing condition Cn is not acceptable, and it is determined to use the specific manufacturing condition Cs as the manufacturing condition C of the specific part 93. Conversely, when the analysis result of stress occurring in the specific part 93 is stress amplitude Δσ2, for instance, the predicted fatigue life is N2, as derived from the predicted S-N curve Ls. In this case, the predicted fatigue life (N2) is equal to or more than the designed fatigue life Nd (N2≥Nd). Accordingly, since the designed fatigue life Nd is satisfied, building the specific part 93 under the normal manufacturing condition Cn is acceptable, and it is determined to use the normal manufacturing condition Cn as the manufacturing condition C of the specific part 93.

The three-dimensional additive manufacturing method according an embodiment including steps S22 to S26 will be described with reference to the flowchart shown in FIG. 4. This procedure may be performed by the manufacturing condition determination device 2.

In step S1 of FIG. 4, the factor value prediction step is performed to predict the value of the fatigue life reduction factor (internal defect dimension "a", surface roughness R). In step S22, the fatigue strength reduction coefficient calculation step is performed to calculate fatigue strength reduction coefficient S corresponding to the predicted value of the fatigue life reduction factor. In step S23, the normal S-N curve acquisition step is performed to acquire the normal S-N curve Ln. In step S24, the stress analysis result acquisition step is performed to acquire the analysis result of stress occurring in the specific part 93.

In the subsequent steps S25 and S26, the application determination step is performed. More specifically, in step S25, using fatigue strength reduction coefficient S, the normal S-N curve Ln, and the analysis result of stress occurring in the specific part 93, the predicted fatigue life of the specific part 93 is calculated. Then, in step S26a, the predicted fatigue life of the specific part 93 is compared with the designed fatigue life Nd, and if the predicted fatigue life is equal to or more than the designed fatigue life Nd, the normal manufacturing condition Cn is determined (decided) as the manufacturing condition C of the specific part 93 in step S26y. Conversely, as a result of comparison in step S26a, if the predicted fatigue life is less than the designed fatigue life Nd, the specific manufacturing condition Cs is determined (decided) as the manufacturing condition C of the specific part 93 in step S26n. Thus, the manufacturing condition C determined for each specific part 93 in the applied condition determination step (S25 and S26) is determined as the condition for building the specific part 93.

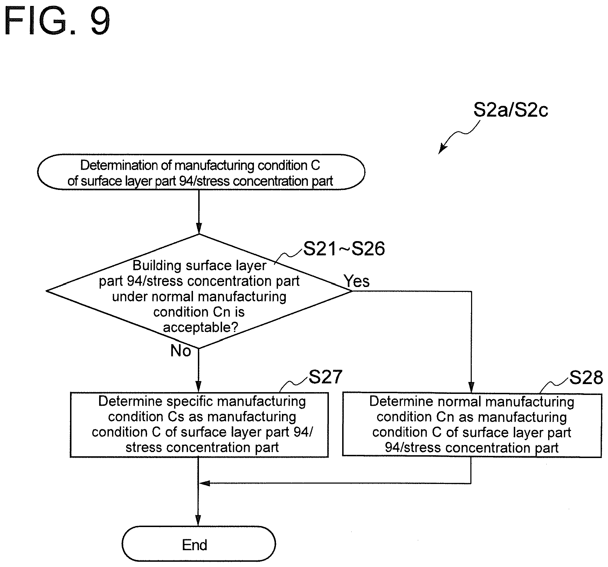

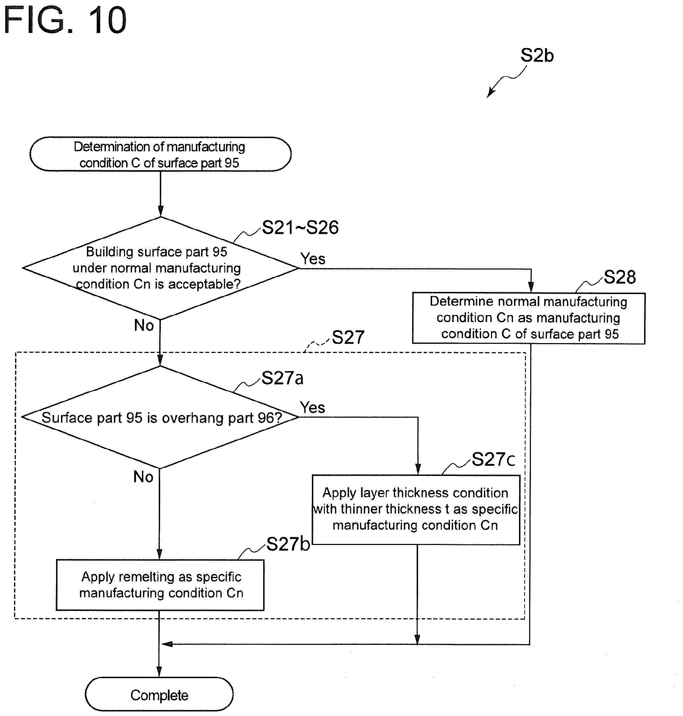

The steps of FIG. 4 described above are the same regardless of the type of the specific part 93. That is, also in FIG. 9 showing the flowchart of determining the manufacturing condition C in a case where the specific part 93 is the surface layer part 94 or the stress concentration part, and FIG. 10 showing the flowchart of determining the manufacturing condition C in a case where the specific part 93 is the surface part 95, in steps S21 to S26, if building the surface layer part 94, the stress concentration part (FIG. 9), or the surface part 95 (FIG. 10) under the normal manufacturing condition Cn is not acceptable, the specific manufacturing condition Cs is determined as the manufacturing condition C in step S27, and if it is acceptable, the normal manufacturing condition Cn is determined as the manufacturing condition C in step S28.

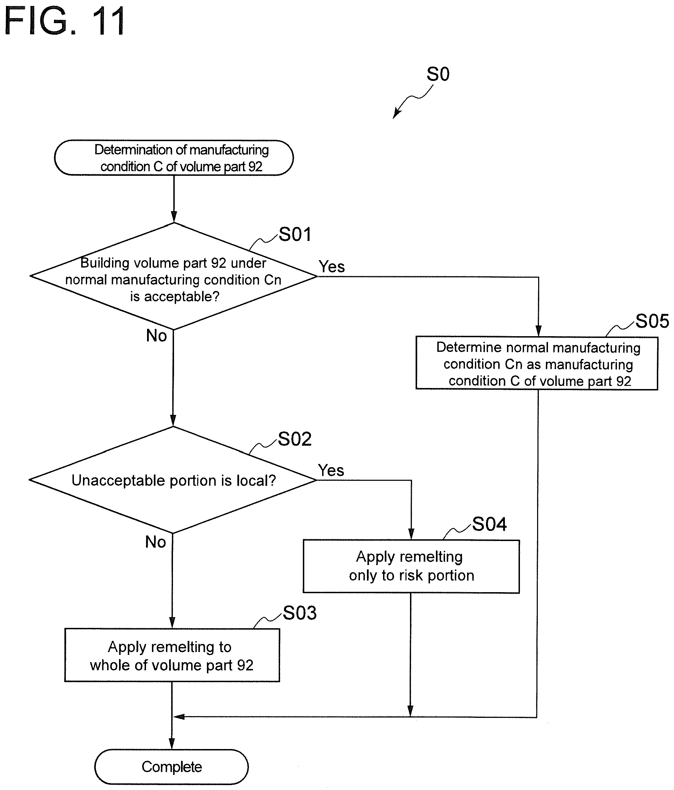

In some embodiments, as in the embodiments regarding the specific part 93, the specific manufacturing condition Cs may be used as the manufacturing condition C of the volume part 92. More specifically, internal defect dimension "a" in the volume part 92 may be predicted (factor value prediction step), a fatigue strength reduction coefficient corresponding to the predicted value of the internal defect dimension "a" may be calculated (fatigue strength reduction coefficient calculation step), a normal S-N curve Ln may be acquired (normal S-N curve acquisition step), an analysis result of stress of at least a part of the three-dimensional object 9 may be acquired based on the design data D (stress analysis result acquisition step), and a predicted fatigue life of the volume part 92 may be calculated using fatigue strength reduction coefficient S and the normal S-N curve Ln. Based on comparison between the predicted fatigue life and the designed fatigue life of the volume part 92, it may be determined whether to apply the specific manufacturing condition Cs to building the volume part 92 (application determination step), and it may be determined whether building the volume part 92 under the normal manufacturing condition Cn is acceptable. In the embodiment shown in FIG. 11, the above determination is performed as step 01, and if not acceptable, the specific manufacturing condition Cs is applied in steps S02 to step S04. More specifically, in step S02, the whole (S03) or a part (S04) of the volume part 92 is remelted in accordance with whether the unacceptable portion is partial (local) or not. Meanwhile, if it is determined to be acceptable in step S0, the normal manufacturing condition Cn is used as the manufacturing condition C of the volume part 92 (S05).

With the above configuration, after the predicted fatigue life of the specific part 93 that is built under the normal manufacturing condition Cn is obtained based on the stress condition, fatigue strength reduction coefficient S, and the normal S-N curve Ln, the manufacturing condition C is determined based on comparison with the designed fatigue life Nd. More specifically, if the predicted fatigue life is less than the designed fatigue life Nd, the specific manufacturing condition Cs is used as the manufacturing condition C of the specific part 93, and if the predicted fatigue life is equal to or more than the designed fatigue life Nd, the normal manufacturing condition Cn is used as the manufacturing condition C of the specific part 93. Thus, it is possible to make the fatigue life of the specific part 93 more than the designed fatigue life Nd, and it is possible to satisfy the demand of fatigue life of the three-dimensional object 9.

The specific manufacturing condition Cs will now be described.

In some embodiments, the specific manufacturing condition Cs includes at least one of a greater number of beam irradiation for solidifying the powder layer 6 of the additive manufactured material stacked, a lower scanning speed, a lower scanning pitch, a larger beam output, a larger offset, or a thicker or thinner thickness t of the powder layer 6 than the normal manufacturing condition Cn. The offset is a parameter for determining a position at which stacking of the surface layer part 94 or the volume part 92 starts, with respect to the surface part 95. By increasing and optimizing the offset of at least one of the stacking start position of the surface layer part 94 or the stacking start position of the volume part 92, it is possible to reduce internal defect dimension "a" and surface roughness R. Thus, by adjusting the solidification condition of the powder layer 6 or the thickness condition of the powder layer 6 in the specific manufacturing condition Cs, it is possible to improve internal defect dimension "a" or surface roughness R compared to building under the normal manufacturing condition Cn.

Further, in some embodiments, as shown in FIG. 10, in a case where the specific part 93 is the surface part 95, if the surface part 95 includes the overhang part 96, the thickness t of the powder layer 6 forming the overhang part 96 is thinner in the specific manufacturing condition Cs than in the normal manufacturing condition Cn (step S27c), and if the surface part 95 does not include the overhang part 96, a condition other than the thickness t of the powder layer 6 differs between the specific manufacturing condition Cs and the normal manufacturing condition Cn (step S27b). In the embodiment shown in FIG. 10, in the specific manufacturing condition Cs when the surface part 95 is other than the overhang part 96, the number of beam irradiation for solidifying the powder layer 6 of the additive manufactured material 5 is greater than in the normal manufacturing condition Cn.

More specifically, in the embodiment shown in FIG. 10, the step 27 starts with step S27a to judge whether the surface part 95 is the overhang part 96. As a result of judgment in step S29a, if the surface part 95 is not the overhang part 96, in step S27b, the specific manufacturing condition Cs with a greater number of beam irradiation than the normal manufacturing condition Cn is applied. In the embodiment shown in FIG. 10, the number of beam irradiation in the normal manufacturing condition Cn is one while in the specific manufacturing condition Cs twice irradiation, i.e., remelting is performed. Conversely, if the surface part 95 is the overhang part 96, in step S27c, the specific manufacturing condition Cs with a thinner layer thickness t than the layer thickness condition of the normal manufacturing condition Cn is applied.

When the thickness t of the powder layer 6 is thinner than the normal manufacturing condition Cn, the number of placing the powder layer 6 is increased, and the manufacturing time is further increased compared with the case where the number of beam irradiation is increased partially in the specific part 93. With the above configuration, it is possible to control the increase in manufacturing time while reliably improving surface roughness R of the overhang part 96.

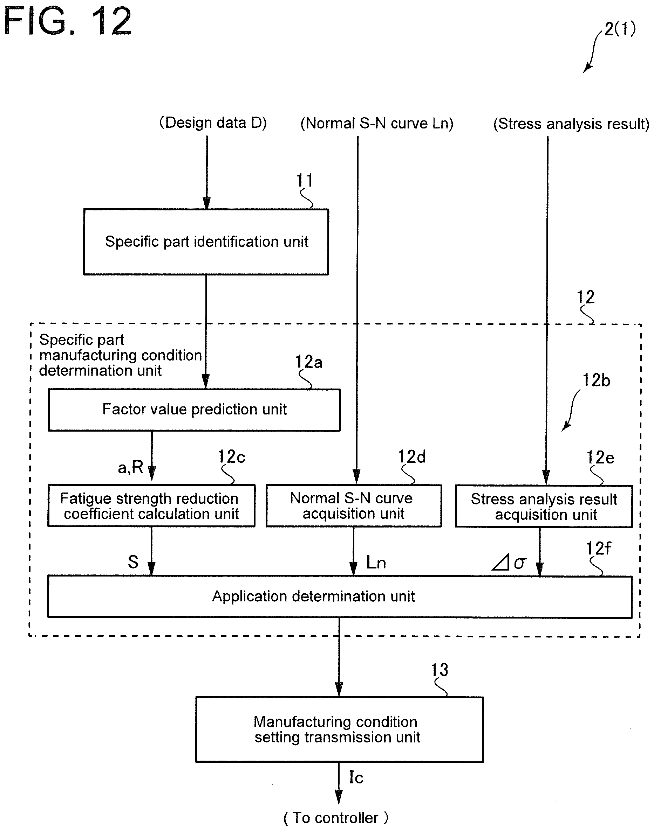

In the following, the three-dimensional additive manufacturing device 1 for performing the above-described three-dimensional additive manufacturing method will be described with reference to FIG. 12. FIG. 12 is a functional block diagram of the manufacturing condition determination device 2 according to an embodiment of the present invention. In the embodiment shown in FIG. 1, functions are divided so that steps S0 to S3 in the three-dimensional additive manufacturing method shown in FIG. 2 is performed by the manufacturing condition determination device 2, and step S4 is performed by the manufacturing execution device 1B.

As shown in FIG. 12, the three-dimensional additive manufacturing device 1 (manufacturing condition determination device 2) includes a specific part identification unit 11 which performs the specific part identification step (S1), a specific part manufacturing condition determination unit 12 which performs the specific part manufacturing condition determination step (S2), and a manufacturing condition setting transmission unit 13 which performs the manufacturing condition setting transmission (S3). The manufacturing condition determination device 2 comprises a computer and includes at least a CPU (processor, not shown), a memory (storage device) such as ROM and RAM, and an external communication interface for connecting to the outside such as the controller 3. The CPU operates (e.g., computation of data) in accordance with program instructions (manufacturing condition determination program) loaded to a main storage device, and thereby the above functional parts are implemented.

The specific part identification unit 11 receives the design data D from a design information management system not depicted, for instance. Further, the specific part identification unit 11 is connected to the specific part manufacturing condition determination unit 12 and transmits information of the identified specific part 93 to the specific part manufacturing condition determination unit 12. The specific part manufacturing condition determination unit 12 is connected to the manufacturing condition setting transmission unit 13. Further, in the embodiment shown in FIG. 1, the manufacturing condition setting transmission unit 13 is connected to the controller 3, and the manufacturing condition setting transmission unit 13 transmits the manufacturing condition setting Ic to the controller 3.

In some embodiments, as shown in FIG. 12, the specific part manufacturing condition determination unit 12 includes a factor value prediction unit 12a which performs the factor value prediction step (S21) and an applied condition determination unit 12b which performs the applied condition determination step (S22 to S26).

Further, in some embodiments, as shown in FIG. 12, the applied condition determination unit 12b may include a fatigue strength reduction coefficient calculation unit 12c which performs the fatigue strength reduction coefficient calculation step (S22), a normal S-N curve acquisition unit 12d which performs the normal S-N curve acquisition step (S23), a stress analysis result acquisition unit 12e which performs the stress analysis result acquisition step (S24), and an application determination unit 12f which performs the application determination step (S25 and S26).

The three-dimensional additive manufacturing method and the three-dimensional additive manufacturing device 1 were described using the metal additive manufacturing method as an example. The present invention is not limited to the metal additive manufacturing method, and may be applied to another three-dimensional additive manufacturing method.

Further, in the above-described three-dimensional additive manufacturing method, in any of the embodiments, the optimal normal manufacturing condition Cn is determined in accordance with the additive manufactured material 5, and it is assumed that the value of the fatigue life reduction factor is improved under the specific manufacturing condition Cs. However, the present invention is not limited to these embodiments. In some embodiments, a manufacturing condition C satisfying the designed fatigue life Nd of the specific part 93 is defined as the normal manufacturing condition Cn, and the specific manufacturing condition Cs may be a condition that allows the deterioration of the value of the fatigue life reduction factor (internal defect dimension "a" or surface roughness R, etc.) compared with the normal manufacturing condition Cn, for shortening the manufacturing time, on the premise that the normal part 91 satisfies the designed fatigue life Nd.

### Reference Signs List

- 1: Three-dimensional additive manufacturing device
- 1A: Manufacturing support device
- 1B: Manufacturing execution device
- 11: Specific part identification unit
- 12: Specific part manufacturing condition determination unit
- 12a: Factor value prediction unit
- 12b: Applied condition determination unit
- 12c: Fatigue strength reduction coefficient calculation unit
- 12d: Normal S-N curve acquisition unit
- 12e: Stress analysis result acquisition unit
- 12f: Application determination unit
- 13: Manufacturing condition setting transmission unit
- 2: Manufacturing condition determination device
- 24: Fatigue life reduction factor value DB
- 25: Strength information DB
- 26: Manufacturing condition storage DB
- 3: Controller
- 4: Base plate
- 5: Additive manufactured material
- 6: Powder layer
- 7: Beam irradiation unit
- 8: Recoater
- 9: Three-dimensional object
- 91: Normal part
- 92: Volume part
- 93: Specific part
- 94: Surface layer part
- 95: Surface part
- 96: Overhang part
- D: Design data
- C: Manufacturing condition
- Cn: Normal manufacturing condition
- Cs: Specific manufacturing condition
- Ic: Manufacturing condition setting
- S: Fatigue strength reduction coefficient
- a: Internal defect dimension
- R: Surface roughness
- Ln: Normal S-N curve
- Ls: Predicted S-N curve
- N: Number of cycles
- Nd: Designed fatigue life
- t: Thickness of powder layer (layer thickness)

## Claims

1. A computer-implemented method for determining a manufacturing condition (C) under which a three-dimensional object (9) is built by layering an additive manufactured material (5) based on design data (D) of the three-dimensional object (9), the method comprising:
a specific part identification step of identifying a specific part (93) included as a part in the three-dimensional object (9), based on the design data (D);
a normal part manufacturing condition determination step of determining a normal manufacturing condition (Cn) for building a normal part (91) other than the specific part (93) of the three-dimensional object (9); and
a specific part manufacturing condition determination step of determining whether to apply a specific manufacturing condition (Cs) different from the normal manufacturing condition (Cn) to the specific part (93) and selecting the normal manufacturing condition (Cn) or the specific manufacturing condition (Cs) as a manufacturing condition of the specific part (93),
wherein the specific part manufacturing condition determination step includes:
a factor value prediction step of predicting a value of a fatigue life reduction factor which is at least one of internal defect dimension (a) or surface roughness (R) caused when the specific part (93) is built under the normal manufacturing condition (Cn); and
an applied condition determination step of determining whether to apply the specific manufacturing condition (Cs) to building the specific part (93), based on a prediction result of the value of the fatigue life reduction factor in the factor value prediction step.

2. The computer-implemented method according to claim 1, wherein the applied condition determination step includes:
a fatigue strength reduction coefficient (S) calculation step of calculating a fatigue strength reduction coefficient (S) corresponding to the value of the fatigue life reduction factor predicted in the factor value prediction step;
a normal S-N curve acquisition step of acquiring a normal S-N curve indicating a relationship between stress amplitude and the number of cycles to failure of a smooth specimen made of the additive manufactured material (5);
a stress analysis result acquisition step of acquiring an analysis result of stress of at least a part of the three-dimensional object (9), based on the design data (D); and
an application determination step of calculating a predicted fatigue life which is the number of the cycles to failure corresponding to the analysis result of stress acquired in the stress analysis result acquisition step for the specific part (93) by using the fatigue strength reduction coefficient (S) and the normal S-N curve, and determining whether to apply the specific manufacturing condition (Cs) to building the specific part (93) based on comparison between the predicted fatigue life and a designed fatigue life.

3. The computer-implemented method according to claim 1 or 2,
wherein the specific part (93) includes at least one of a surface layer part (94), a surface part, or a stress concentration part of a volume part of the three-dimensional object (9).

4. The computer-implemented method according to claim 3,
wherein the specific manufacturing condition (Cs) includes at least one of a greater number of beam irradiation for solidifying a powder layer (6) of the additive manufactured material (5) stacked, a lower scanning speed, a lower scanning pitch, a larger beam output, a larger offset, or a thicker or thinner thickness of the powder layer (6) than the normal manufacturing condition (Cn).

5. The computer-implemented method according to claim 4,
wherein, in a case where the specific part (93) is the surface part (95), if the surface part (95) includes an overhang part (96), a thickness of the powder layer (6) forming the overhang part (96) is thinner in the specific manufacturing condition (Cs) than in the normal manufacturing condition (Cn), and if the surface part (95) does not include the overhang part (96), a condition other than the thickness of the powder layer (6) differs between the specific manufacturing condition (Cs) and the normal manufacturing condition (Cn).

6. A data processing apparatus comprising means for carrying out the method of any one of claims 1 to 5.

7. A three-dimensional additive manufacturing execution method comprising:
determining the manufacturing condition (C) by the method according to any one of claims 1 to 5; and
building a three-dimensional object (9) with the manufacturing condition (C) determined.

8. A three-dimensional additive manufacturing execution device (1B) for building a three-dimensional object (9) comprising:
the data processing apparatus according to claim 6 to determine the manufacturing condition (C) for building a three-dimensional object (9).

## Patentansprüche

1. Ein computerimplementiertes Verfahren zum Bestimmen einer Herstellungsbedingung (C), unter der ein dreidimensionales Objekt (9) durch Schichtung eines additiv hergestellten Materials (5) basierend auf Konstruktionsdaten (D) des dreidimensionalen Objekts (9) aufgebaut wird, wobei das Verfahren aufweist:
einen Spezifisches-Teil-Identifikationsschritt zum Identifizieren eines spezifischen Teils (93), das als ein Teil in dem dreidimensionalen Objekt (9) enthalten ist, basierend auf den Konstruktionsdaten (D);
einen Normales-Teil-Herstellungsbedingungs-Bestimmungsschritt zum Bestimmen einer normalen Herstellungsbedingung (Cn) zum Aufbauen eines normalen Teils (91), das sich von dem spezifischen Teil (93) des dreidimensionalen Objekts (9) unterscheidet; und
einen Spezifisches-Teil-Herstellungsbedingungs-Bestimmungsschritt zum Bestimmen, ob eine spezifische Herstellungsbedingung (Cs), die sich von der normalen Herstellungsbedingung (Cn) unterscheidet, auf das spezifische Teil (93) angewendet werden soll, und zum Auswählen der normalen Herstellungsbedingung (Cn) oder der spezifischen Herstellungsbedingung (Cs) als eine Herstellungsbedingung des spezifischen Teils (93),
wobei der Spezifisches-Teil-Herstellungsbedingungs-Bestimmungsschritt Folgendes umfasst:
einen Faktorwert-Vorhersageschritt zum Vorhersagen eines Wertes eines Ermüdungslebensdauer-Reduktionsfaktors, der zumindest eines von einer inneren Defektabmessung (a) oder einer Oberflächenrauhigkeit (R) ist, die verursacht wird, wenn das spezifische Teil (93) unter der normalen Herstellungsbedingung (Cn) aufgebaut wird; und
einen Angewandte-Bedingungs-Bestimmungsschritt zum Bestimmen, ob die spezifische Herstellungsbedingung (Cs) zum Aufbauen des spezifischen Teils (93) angewandt werden soll, basierend auf einem Vorhersageergebnis des Wertes des Ermüdungslebensdauer-Reduktionsfaktors in dem Faktorwert-Vorhersageschritt.

2. Das computerimplementierte Verfahren nach Anspruch 1, wobei der Angewandte-Bedingungs-Bestimmungsschritt Folgendes umfasst:
einen Ermüdungsfestigkeits-Reduktionskoeffizienten (S)-Berechnungsschritt zum Berechnen eines Ermüdungsfestigkeits-Reduktionskoeffizienten (S) korrespondierend zu dem Wert des Ermüdungslebensdauer-Reduktionsfaktors, der in dem Faktorwert-Vorhersageschritt vorhergesagt wurde;
einen Normale-S-N-Kurve-Erfassungsschritt zum Erfassen einer normalen S-N-Kurve, die eine Beziehung zwischen einer Spannungsamplitude und der Anzahl an Zyklen bis zum Versagen einer glatten Probe aus dem additiv hergestellten Material (5) anzeigt;
einen Spannungsanalyseergebnis-Erfassungsschritt zum Erfassen eines Analyseergebnisses der Spannung von zumindest einem Teil des dreidimensionalen Objekts (9) basierend auf den Konstruktionsdaten (D); und
einen Anwendungsbestimmungsschritt zum Berechnen einer vorhergesagten Ermüdungslebensdauer, die die Anzahl der Zyklen bis zum Versagen ist, korrespondierend zu dem Analyseergebnis der Spannung, das in dem Spannungsanalyseergebnis-Erfassungsschritt für das spezifische Teil (93) unter Verwendung des Ermüdungsfestigkeits-Reduktionskoeffizienten (S) und der normalen S-N-Kurve erfasst wurde, und zum Bestimmen, ob die spezifische Herstellungsbedingung (Cs) angewandt werden soll, um das spezifische Teil (93) basierend auf einem Vergleich zwischen der vorhergesagten Ermüdungslebensdauer und einer konstruierten Ermüdungslebensdauer aufzubauen.

3. Das computerimplementierte Verfahren nach Anspruch 1 oder 2,
wobei das spezifische Teil (93) zumindest eines von einem Oberflächenschichtteil (94), einem Oberflächenteil oder einem Spannungskonzentrationsteil eines Volumenteils des dreidimensionalen Objekts (9) umfasst.

4. Das computerimplementierte Verfahren nach Anspruch 3,
wobei die spezifische Herstellungsbedingung (Cs) zumindest eines von einer größeren Anzahl an Strahlenbestrahlungen zur Verfestigung einer Pulverschicht (6) des gestapelten, additiv hergestellten Materials (5), einer geringeren Abtastgeschwindigkeit, einem geringeren Abtastabstand, einer größeren Strahlleistung, einem größeren Versatz oder einer dickeren oder dünneren Dicke der Pulverschicht (6) als die normale Herstellungsbedingung (Cn) umfasst.

5. Das computerimplementierte Verfahren nach Anspruch 4,
wobei in einem Fall, in dem das spezifische Teil (93) das Oberflächenteil (95) ist, falls das Oberflächenteil (95) ein überhängendes Teil (96) enthält, eine Dicke der Pulverschicht (6), die das überhängende Teil (96) ausbildet, in der spezifischen Herstellungsbedingung (Cs) dünner ist als in dem normalen Herstellungszustand (Cn), und falls das Oberflächenteil (95) das überhängende Teil (96) nicht enthält, eine andere Bedingung als die Dicke der Pulverschicht (6) sich zwischen der spezifischen Herstellungsbedingung (Cs) und der normalen Herstellungsbedingung (Cn) unterscheidet.

6. Eine Datenverarbeitungsvorrichtung mit Mitteln zur Ausführung des Verfahrens nach einem der Ansprüche 1 bis 5.

7. Ein Verfahren zum Ausführen einer dreidimensionalen additiven Herstellung, aufweisend:
Bestimmen der Herstellungsbedingung (C) durch das Verfahren nach einem der Ansprüche 1 bis 5; und
Aufbauen eines dreidimensionalen Objekts (9) mit der bestimmten Herstellungsbedingung (C).

8. Eine Vorrichtung (1B) zur Ausführung einer dreidimensionalen additiven Herstellung zum Aufbau eines dreidimensionalen Objekts (9), aufweisend:
die Datenverarbeitungsvorrichtung nach Anspruch 6, um die Herstellungsbedingung (C) zum Aufbauen eines dreidimensionalen Objekts (9) zu bestimmen.

## Revendications

1. Procédé mis en oeuvre par ordinateur pour déterminer une condition de fabrication (C) sous laquelle un objet tridimensionnel (9) est construit en disposant en couches un matériau de fabrication additive (5) sur la base de données de conception (D) de l'objet tridimensionnel (9), le procédé comprenant :
une étape d'identification de partie spécifique identifiant une partie spécifique (93) comprise en tant que partie dans l'objet tridimensionnel (9), sur la base des données de conception (D) ;
une étape de détermination de condition de fabrication de partie normale déterminant une condition de fabrication normale (Cn) pour construire une partie normale (91) autre que la partie spécifique (93) de l'objet tridimensionnel (9) ; et
une étape de détermination de condition de fabrication de partie spécifique déterminant s'il faut appliquer une condition de fabrication spécifique (Cs) différente de la condition de fabrication normale (Cn) à la partie spécifique (93) et sélectionnant la condition de fabrication normale (Cn) ou la condition de fabrication spécifique (Cs) en tant que condition de fabrication de la partie spécifique (93),
dans lequel l'étape de détermination de condition de fabrication de partie spécifique comporte :
une étape de prédiction de valeur de facteur prédisant une valeur d'un facteur de réduction de durée de vie en fatigue qui est au moins une parmi une dimension de défaut interne (a) ou une rugosité de surface (R) provoquée lorsque la partie spécifique (93) est construite sous la condition de fabrication normale (Cn) ; et
une étape de détermination de condition appliquée déterminant s'il faut appliquer la condition de fabrication spécifique (Cs) à la construction de la partie spécifique (93), sur la base d'un résultat de prédiction de la valeur du facteur de réduction de durée de vie en fatigue lors de l'étape de prédiction de valeur de facteur.

2. Procédé mis en oeuvre par ordinateur selon la revendication 1,
dans lequel l'étape de détermination de condition appliquée comporte :
une étape de calcul de coefficient de réduction de résistance à la fatigue (S) calculant un coefficient de réduction de résistance à la fatigue (S) correspondant à la valeur du facteur de réduction de durée de vie en fatigue prédite lors de l'étape de prédiction de valeur de facteur ;
une étape d'acquisition de courbe S/N normale acquérant une courbe S/N normale indiquant une relation entre une amplitude de contrainte et le nombre de cycles jusqu'à la rupture d'un échantillon lisse fait dans le matériau de fabrication additive (5) ;
une étape d'acquisition de résultat d'analyse de contrainte acquérant un résultat d'analyse de contrainte d'au moins une partie de l'objet tridimensionnel (9), sur la base des données de conception (D) ; et
une étape de détermination d'application calculant une durée de vie en fatigue prédite qui est le nombre des cycles jusqu'à la rupture correspondant au résultat d'analyse de contrainte acquis lors de l'étape d'acquisition de résultat d'analyse de contrainte pour la partie spécifique (93) en utilisant le coefficient de réduction de résistance à la fatigue (S) et la courbe S/N normale, et déterminant s'il faut appliquer la condition de fabrication spécifique (Cs) à la construction de la partie spécifique (93) sur la base d'une comparaison entre la durée de vie en fatigue prédite et une durée de vie en fatigue conçue.

3. Procédé mis en oeuvre par ordinateur selon la revendication 1 ou 2, dans lequel la partie spécifique (93) comporte au moins une parmi une partie de couche de surface (94), une partie de surface ou une partie de concentration de contrainte d'une partie de volume de l'objet tridimensionnel (9).

4. Procédé mis en oeuvre par ordinateur selon la revendication 3,
dans lequel la condition de fabrication spécifique (Cs) comporte au moins un parmi un plus grand nombre d'irradiation de faisceau pour solidifier une couche de poudre (6) du matériau de fabrication additive (5) empilé, une vitesse d'exploration plus faible, un pas d'exploration plus petit, une sortie de faisceau plus grande, un décalage plus grand ou une épaisseur plus épaisse ou plus fine de la couche de poudre (6) que la condition de fabrication normale (Cn).

5. Procédé mis en oeuvre par ordinateur selon la revendication 4,
dans lequel, dans un cas où la partie spécifique (93) est la partie de surface (95), si la partie de surface (95) comporte une partie en surplomb (96), une épaisseur de la couche de poudre (6) formant la partie en surplomb (96) est plus fine dans la condition de fabrication spécifique (Cs) que dans la condition de fabrication normale (Cn), et si la partie de surface (95) ne comporte pas la partie en surplomb (96), une condition autre que l'épaisseur de la couche de poudre (6) diffère entre la condition de fabrication spécifique (Cs) et la condition de fabrication normale (Cn).

6. Appareil de traitement de données comprenant des moyens pour réaliser le procédé selon l'une quelconque des revendications 1 à 5.

7. Procédé d'exécution de fabrication additive tridimensionnelle comprenant :
la détermination de la condition de fabrication (C) par le procédé selon l'une quelconque des revendications 1 à 5 ; et
la construction d'un objet tridimensionnel (9) avec la condition de fabrication (C) déterminée.

8. Dispositif d'exécution de fabrication additive tridimensionnelle (1B) pour construire un objet tridimensionnel (9) comprenant :
l'appareil de traitement de données selon la revendication 6 pour déterminer la condition de fabrication (C) pour construire un objet tridimensionnel (9).
